Europäisches Patentamt

**European Patent Office**

Office européen des brevets

(19)

(11) Veröffentlichungsnummer: **0 170 859**
A1

(12) **EUROPÄISCHE PATENTANMELDUNG**

(21) Anmeldenummer: **85107904.6**

(22) Anmeldetag: **26.06.85**

(51) Int. Cl.⁴: **F 27 B 1/08, C 04 B 2/12**

(30) Priorität: **21.07.84 DE 3426956**

(43) Veröffentlichungstag der Anmeldung: **12.02.86**
**Patentblatt 86/7**

(84) Benannte Vertragsstaaten: **BE DE FR GB IT LU NL**

(71) Anmelder: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Rodenhäuser, Fritz, Dr., Mendener Strasse 8,**
**D-5000 Köln 91 (DE)**
Erfinder: **Weber, Albrecht, Düsseldorfer Strasse 125,**
**D-4030 Ratingen (DE)**
Erfinder: **Herchenbach, Horst, Sonnenweg 6,**
**D-5202 Hennef 1 (DE)**

(74) Vertreter: **Beisner, Klaus, Dipl.-Ing. et al, c/o KHD**
**Humboldt Wedag AG Patente und Lizenzen**
**Wiersbergstrasse Postfach 91 04 57, D-5000 Köln 91 (DE)**

(54) **Schachtofen zum Brennen von körnigen und/oder stückigen Materialien.**

(57) Bei Schachtöfen zum Brennen von körnigen und/oder stückigen Materialien, insbesondere zum Brennen von Kalkstein, Dolomit, Magnesit oder dergleichen, sind an der Innenausmauerung (2) des Ofens, und zwar im Bereich der Brennzone nach innen ragende Vorsprünge aus verschleißfesten hitzebeständigen Hohlkörpern (4) angeordnet, die in der Innenausmauerung (2) des Schachtofens von außen einsetzbar sind. Unter den Hohlkörpern (4) befinden sich die Zuleitungen (8) für den Brennstoff.

EP 0 170 859 A1

Anlage zum Patentgesuch der     - 1 -     K H D
Klöckner-Humboldt-Deutz            H 84/34
Aktiengesellschaft

vom 19. Juli 1984

Schachtofen zum Brennen von körnigen und/oder
stückigen Materialien

---

## Beschreibung

Die Erfindung bezieht sich auf einen Schachtofen zum
Brennen von körnigen und/oder stückigen Materialien,
insbesondere zum Brennen von Kalkstein, Dolomit,
Magnesit und dergleichen, mit im Bereich der
Brennzone an der Innenausmauerung des Ofens
angeordneten, nach innen ragenden Vorsprüngen und mit
darunter angeordneten Zuleitungen für den Brennstoff.

Die im Bereich der Brennzone an der Innenausmauerung
des Schachtofens angeordneten Vorsprünge dienen
einerseits dazu, um in der Materialschüttung im Ofen
einen Freiraum für das Einbringen von staubförmigen
oder feinkörnigen Brennstoffen zu schaffen, und
andererseits dazu, um das darunter befindliche
Einblasrohr für den Brennstoff vor Verschleiß
und/oder Verstopfung zu schützen.

Aus der US-PS 4,210,632 ist ein Schachtofen obiger Bauart bekannt, bei dem die an der Innenausmauerung des Ofens angeordneten Vorsprünge aus Metallhauben bestehen. Da diese Metallhauben im Betrieb des Schachtofens einem hohen Verschleiß ausgesetzt sind, müssen sie häufig ausgewechselt werden. Das Auswechseln dieser Metallhauben ist jedoch mit einem hohen Arbeits-, Zeit- und Kostenaufwand verbunden. Denn um die jeweils verschlissenen Metallhauben gegen neue auswechseln zu können, muß der Schachtofen entleert und so lang außer Betrieb gesetzt werden, bis daß der Innenraum so weit abgekühlt ist, daß die Demontage der verschlissenen Metallhauben und die Montage der neuen Metallhauben von innen her vorgenommen werden kann.

Die Aufgabe der Erfindung besteht darin, die an der Innenausmauerung eines Schachtofens angeordneten Vorsprünge in ihrem konstruktiven Aufbau zu verbessern und in der Anordnung erheblich zu vereinfachen.

Diese Aufgabe wird dadurch gelöst, daß die Vorsprünge aus verschleißfesten hitzebeständigen Hohlkörpern bestehen, die in der Innenausmauerung des Ofens von außen einsetzbar angeordnet sind. Dadurch, daß die Vorsprünge gemäß der Erfindung aus verschleißfesten hitzebeständigen Hohlkörpern bestehen, wird die Standzeit gegenüber bekannten Vorsprüngen ganz wesentlich erhöht, so daß sie nur selten ausgewechselt werden brauchen. Weiterhin können die Hohlkörper gemäß der Erfindung, da sie in der Innenausmauerung des Ofens von außen einsetzbar angeordnet sind, im Bedarfsfalle sehr leicht und verhältnismäßig rasch von außen her ausgewechselt beziehungsweise erneuert werden, ohne daß hierfür der Schachtofen ganz entleert werden muß, oder so lange gewartet werden muß, bis der Ofen ausgekühlt ist. Das Auswechseln der jeweils verschlissenen Hohlkörper gegen neue kann daher in sehr einfacher Weise und mit verhältnismäßig geringem Arbeits-, Zeit- und Kostenaufwand vorgenommen werden.

In vorteilhafter Weiterbildung der Erfindung bestehen die Hohlkörper aus Gußstahl, Sintermetall, Keramik oder dergleichen. Insbesondere die aus Sintermetall oder Keramik bestehenden Hohlkörper gemäß der Erfindung haben eine sehr hohe Standzeit und brauchen daher nur selten ausgewechselt zu werden.

Gemäß einer weiteren Ausgestaltung der Erfindung ist wenigstens der in den Ofen hineinragende Teil der Hohlkörper im Querschnitt dach- oder rinnenförmig ausgebildet. Diese Ausbildung der Hohlkörper gemäß der Erfindung hat den Vorteil, daß die darunterbefindlichen Brennstoffzuleitungen nicht nur von oben sondern auch von der Seite her gegen Beschädigungen oder Verschleiß geschützt werden.

Die Erfindung wird nachfolgend anhand der in der Zeichnung schematisch dargestellten Ausführungsbeispiele näher erläutert.
Es zeigen:

Fig. 1 einen Teilausschnitt einer Schachtofenwandung mit in der Innenausmauerung eingesetztem Hohlkörper gemäß der Erfindung,

Fig. 2  einen Teilausschnitt einer Schachtofenwandung
mit in der Innenausmauerung angeordnetem
Hohlkörper anderer Ausgestaltung gemäß der
Erfindung.

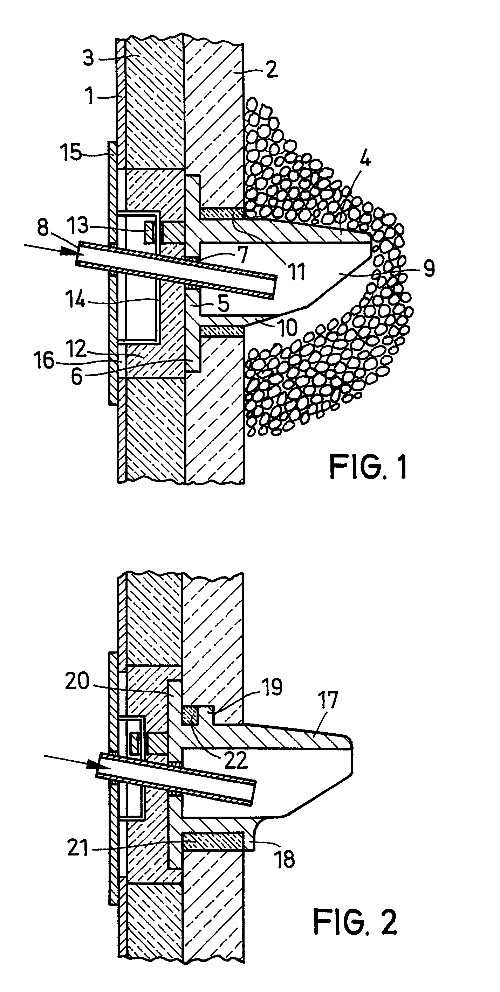

Wie Fig. 1 zeigt, besteht die Wandung des
Schachtofens aus einem äußeren Blechmantel 1, einem
feuerfesten Mauerwerk 2 sowie einer zwischen
Blechmantel 1 und Mauerwerk 2 befindlichen
Füllschicht 3. Im feuerfesten Mauerwerk 2 ist ein aus
verschleißfestem hitzebeständigem Material
bestehender Hohlkörper 4 angeordnet, der mit einem
Boden 5 und einem Ringflansch 6 versehen ist. Der
Boden 5 des Hohlkörpers 4 weist eine Öffnung 7 auf,
durch die eine Zuleitung 8 für den Brennstoff
hindurchgeführt ist. Der Ringflansch 6 des
Hohlkörpers 4 ist im feuerfesten Mauerwerk 2
eingelassen. Der in den Ofen hineinragende Teil 9 des
Hohlkörpers 4 ist im Querschnitt dach- oder
rinnenförmig ausgebildet, während der innerhalb des
feuerfesten Mauerwerks 2 befindliche Teil des
Hohlkörpers 4 die Form eines Zylinders aufweist.
Zwischen diesem zylinderförmigen Teil 10 des
Hohlkörpers 4 und der feuerfesten Innenausmauerung 2
ist eine feuerfeste aber nachgiebige Füllung 11
vorgesehen. Ferner ist hierbei auch der Raum zwischen
dem Boden 5 mit Ringflansch 6 und dem Blechmantel 1
der Wandung des Schachtofens mit einem feuerfesten,
jedoch nachgiebigen Material beziehungsweise
Füllmasse 12 ausgefüllt. Von dieser zwischen dem
Hohlkörper 4 und der feuerfesten Innenausmauerung 2
angeordneten nachgiebigen Füllmasse 11 und der hinter
dem Hohlkörper 4 angeordneten nachgiebigen Füllmasse
12 werden sehr vorteilhaft alle im Betrieb des
Schachtofens durch Hitzeeinwirkung auf den Hohlkörper
4 auswirkenden Dehnungen und Spannungen aufgenommen

0170859
K H D
H 84/34

und nicht auf die feuerfeste Innenausmauerung 2 übertragen. Die Innenausmauerung 2 wird auf diese Weise sehr vorteilhaft vor jeglicher Beschädigung bewahrt.

Am Boden 5 des Hohlkörpers 4 ist ferner ein Fortsatz 13 angeordnet, durch den ein Zuganker 14 in Längsrichtung geführt ist. Der Zuganker 14 ist hierbei mit einem Abschlußdeckel 15 lösbar verbunden, der seinerseits die im Blechmantel 1 angeordnete Öffnung 16 von außen abschließt. Die Öffnung 16 im Blechmantel 1 ist hierbei gleichgroß oder etwas größer ausgebildet als der am Hohlkörper 4 angeordnete Ringflansch 6. Auf diese Weise kann sehr vorteilhaft der Hohlkörper 4 gemäß der Erfindung von außen her in die feuerfeste Innenausmauerung 2 eingesetzt werden. Auch das Auswechseln des jeweils verschlissenen Hohlkörpers 4 kann in einfacher Weise von außen her vorgenommen werden, und zwar brauchen hierzu nur der mit dem Blechmantel 1 lösbar verbundene Deckel 15 abgenommen und die Füllmasse 12 herausgenommen werden. Auch die Montage des neuen Hohlkörpers kann in einfacher Weise von außen her durch einfaches Einsetzen in die feuerfeste Innenausmauerung 2 des Schachtofens bewerkstelligt werden. Da der Hohlkörper 4 gemäß der Erfindung aus Gußstahl, Sintermetall, Keramik oder dergleichen besteht, weist er eine verhältnismäßig hohe Standzeit auf, so daß er nur sehr selten ausgewechselt werden muß. Im übrigen wird auch sehr vorteilhaft durch die zwischen dem Hohlkörper 4 und der feuerfesten Innenausmauerung 2 angeordnete nachgiebige Füllmasse 11 ein sicherer gasdichter Abschluß nach außen hin erreicht. Die Hohlkörper 4 sind über dem Umfang des Schachtofens in einer Ebene oder auch mehreren Ebenen gleichmäßig verteilt angeordnet, wodurch eine allseitige gleichmäßige Beschickung beziehungsweise Versorgung der im Schachtofen befindlichen Materialschicht mit Brennstoff gewährleistet wird.

Bei dem in Fig. 2 dargestellten Ausführungsbeispiel ist der Hohlkörper 17 gemäß der Erfindung außen mit Fortsätzen 18 und 19 versehen, die in Verbindung mit dem Ringflansch 20 des Hohlkörpers 17 eine gegenüber Wärmespannungen nachgiebige Füllmasse 21 beziehungsweise 22 einschließen. Im übrigen ist der Hohlkörper 17 in der Weise wie der Hohlkörper 4 gemäß Fig. 1 in der Innenausmauerung des Schachtofens von außen her einsetzbar angeordnet.

Durch die in der Innenausmauerung des Schachtofens angeordneten, in den Ofen hineinragenden Hohlkörper gemäß der Erfindung wird sehr vorteilhaft das Einbringen von feinkörnigen beziehungsweise staubförmigen Brennstoffen in die im Schachtofen befindlichen körnigen und/oder stückigen Materialien besonders begünstigt. Auch wird durch die erfindungsgemäß ausgebildeten Hohlkörper ein allseitiger Schutz der Brennstoffzuführungsleitungen gewährleistet.

Ferner kann durch den Einsatz der erfindungsgemäß ausgebildeten und in der Schachtofenwandung gleichmäßig verteilt angeordneten Hohlkörper sehr vorteilhaft der Querschnitt des Ofens von beispielsweise 5 m$^2$ auf 8,25 m$^2$ erhöht werden, und zwar bei einer Verlängerung der in den Ofen hineinragenden Teile der Hohlkörper von nur 25 cm und bei voller Aufrechterhaltung einer gleichmäßigen Brennstoffverteilung über den gesamten Querschnitt

0170859
K H D
H 84/34

der im Ofen befindlichen Materialschicht. Dies bringt weiterhin den Vorteil einer Erhöhung der Durchsatzleistung von über 50 % mit sich.

Im übrigen sind, wie insbesondere die Fig. 1 zeigt, die in den Schachtofen hineinragenden Teile der Hohlkörper 4 im Querschnitt dach- oder rinnenförmig nach unten offen ausgebildet. Hierdurch werden nicht nur sehr vorteilhaft die darunter befindlichen Brennstoffzuführungsleitungen von oben und von der Seite her vor Verstopfungen oder Beschädigungen geschützt, sondern hierdurch wird auch sehr vorteilhaft erreicht, daß die im Ofen von oben nach unten wandernden Materialien sehr leicht über diese nach oben gewölbten Hohlkörper hinweggleiten und dadurch Stauungen vermieden werden.

- 1 -

0170859

H 84/34

Patentansprüche

1. Schachtofen zum Brennen von körnigen und/oder stückigen Materialien, insbesondere zum Brennen von Kalkstein, Dolomit, Magnesit oder dergleichen, mit im Bereich der Brennzone an der Innenausmauerung des Ofens angeordneten, nach innen ragenden Vorsprüngen und mit darunter angeordneten Zuleitungen für den Brennstoff, dadurch gekennzeichnet, daß die Vorsprünge aus verschleißfesten hitzebeständigen Hohlkörpern (4, 17) bestehen, die in der Innenausmauerung (2) des Ofens von außen einsetzbar angeordnet sind.

2. Schachtofen nach Anspruch 1, dadurch gekennzeichnet, daß die Hohlkörper (4, 17) aus Gußstahl, Sintermetall, Keramik oder dergleichen bestehen.

3. Schachtofen nach Anspruch 1 oder 2, dadurch gekennzeichnet, daß wenigstens der in den Ofen hineinragende Teil (9) der Hohlkörper (4, 17) im Querschnitt dach- oder rinnenförmig ausgebildet ist.

0170859

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | US-A-4 210 632 (ROURKE) <br> * Zusammenfassung; Abbildungen 5,6; Spalte 4, Zeilen 22-49 * | 1-3 | F 27 B 1/08 <br> C 04 B 2/12 |
| Y | BE-A- 810 284 (CARMEUSE) <br> * Abbildung; Seite 3, Absatz 2 - Seite 3, Absatz 1 * | 1 | |
| Y | FR-A-2 396 254 (CENTRE TECHNIQUE DES INDUSTRIES MECANIQUES ET ENTREPRISE GENERALE DE CHAUFFAGE INDUSTRIEL PILLARD) <br> * Abbildungen 8,9; Patentansprüche; Seite 3, Zeilen 12-36 * | 1-3 | |
| A | DE-A-3 236 216 (KLÖCKNER-HUMBOLDT-DEUTZ) | | **RECHERCHIERTE SACHGEBIETE (Int. Cl.4)** <br><br> F 27 B <br> C 04 B |

Der vorliegende Recherchenbericht wurde für alle Patentansprüche erstellt.

| Recherchenort | Abschlußdatum der Recherche | Prüfer |
|---|---|---|
| DEN HAAG | 04-11-1985 | OBERWALLENEY R.P.L.I |